# EUROPÄISCHE PATENTSCHRIFT

(11) **EP 2 583 819 B1**
(45) Veröffentlichungstag und Bekanntmachung des Hinweises auf die Patenterteilung: **11.12.2013**
(21) Anmeldenummer: 11185370.1
(22) Anmeldetag: 17.10.2011
(51) Int. Cl.: B32B 5/26, B32B 7/04, B32B 27/12, B60R 13/02

(54) **Verfahren zum Kaschieren eines Bauteils**
Method for laminating a component
Procédé destiné à masquer un composant

(43) Veröffentlichungstag der Anmeldung: 24.04.2013
(73) Patentinhaber: SMP Deutschland GmbH, 79268 Bötzingen (DE)
(72) Erfinder: Buchet, Yann, 67000 Strasbourg (FR)
(74) Vertreter: Patentanwälte Westphal, Mussgnug & Partner

(56) Entgegenhaltungen:
- DE-A1- 10 044 627
- DE-A1-102005 042 995
- DE-A1-102009 041 683
- DE-U1- 29 823 765

## Beschreibung

Die vorliegende Erfindung betrifft ein Verfahren zum Kaschieren eines Bauteils mit den Merkmalen des Oberbegriffs des Anspruchs 1.

Innenverkleidungsbauteile für Kraftfahrzeuge werden heute in der Regel aus Kunststoff gefertigt und besitzen häufig eine mehrschichtige Struktur aus mindestens einem Trägerbauteil und einer Oberflächenschicht. Dabei handelt es sich meist um spritzgegossene Kunststoffbauteile, bei denen als Oberflächenschicht oder Dekorschicht häufig Formhäute, Gewebe, Textilstoffe, Leder oder Kunstleder eingesetzt werden. In Abhängigkeit von der Kontur und Form des Bauteils und insbesondere aus Gründen der Optik werden dabei häufig Kaschierstoffe mit Nähten eingesetzt. Insbesondere bei der Verwendung von Leder ist das Vorhandensein von Nähten aufgrund des hohen Elastizitätsmoduls des Leders erforderlich, um die für das Kaschieren erforderliche Dehnung des Materials zu ermöglichen. Auch bei Lederimitaten werden häufig Nähte eingebracht, um den Eindruck von natürlichem Leder hervorzurufen. Beim Kaschieren des Bauteils selber muss in solchen Fällen auf eine korrekte Ausrichtung der Ziernaht bzw. der Naht zu dem Bauteil geachtet werden, was insbesondere bei kompliziert aufgebauten Bauteilen mit einem erhöhten Positionierungsaufwand verbunden ist, der zu einer deutlichen Verlängerung der Fertigungsdauer und damit zu erhöhten Kosten führt.

In der DE 10 2009 041 683 A1 wird ein Verfahren zur Herstellung eines Innenverkleidungsbauteils beschrieben, mit dem der Fertigungsaufwand reduziert werden soll. Dabei weist das Innenverkleidungsbauteil eine Dekorschicht auf, die in ihrem optischen Eindruck als aus mindestens zwei Teilen an einem in einer Längsrichtung verlaufenden Abschnitt zusammengesetzt erscheint. Dazu wird ein Abschnitt der Dekorschicht in Längsrichtung in eine Nut des Trägerteils eingerückt und anschließend mit dem Trägerteil vernäht. Dieses Verfahren ist für Leder weniger gut geeignet und hat zusätzlich den Nachteil, dass das Anbringen dieser unechten Ziernaht immer noch relativ aufwendig ist und das Verfahren für Kaschierstoffe mit echten Nähten natürlich nicht eingesetzt werden kann.

DE 102005042 995 A1 beschreibt ein Verfahren zum Kaschieren eines Bauteils gemäß den Oberbegriff des Patentanspruchs 1.

Die korrekte Positionierung einer echten Naht eines Kaschierstoffes ist heute generell noch ein Problem, so ist beispielsweise in der Automobilbranche noch kein Verfahren bekannt, das es erlaubt, das Kaschieren von Bauteilen mit genähten Kaschierstoffen, wie z.B. Lederhäuten, vollautomatisch ablaufen zu lassen.

Aufgabe der Erfindung ist es daher, ein Verfahren zum Kaschieren von Bauteilen anzubieten, das Vorteile gegenüber dem Stand der Technik hat und es erlaubt, den Fertigungsaufwand zur Herstellung eines kaschierten Bauteils zu reduzieren.

Gelöst wird die Aufgabe mit einem Verfahren mit den Merkmalen des Anspruchs 1. Weiterentwicklungen und vorteilhafte Ausgestaltungen des erfindungsgemäßen Verfahrens sind Gegenstand der entsprechenden Unteransprüche.

Der Erfindung liegt die Erkenntnis zugrunde, dass das besondere Problem beim Kaschieren von Bauteilen mit Nähte aufweisenden Kaschierstoffen darin besteht, dass die Kaschierstoffe allgemein wenig Angriffspunkte für eine automatische Positionierungseinrichtung aufweisen. Die Positionierung des Kaschierstoffes bzw. der Nähte des Kaschierstoffes erfolgt zudem meist von der Sichtseite des Bauteils her, auf der der zu korrigierende und auszurichtende Kaschierstoff besonders wenige Eingriffsmöglichkeiten für eine automatische Positionierung aufweist. Das hat zur Folge, dass die Positionierung des Kaschierstoffes auch heute immer noch zumindest teilweise mit Handarbeit verbunden ist, die dann meist durch entsprechende Maschineneinrichtungen unterstützt wird.

Die vorliegende Erfindung bietet nun ein Verfahren an zum Kaschieren eines Bauteiles, insbesondere eines Innenverkleidungsbauteils für ein Kraftfahrzeug, mit einem mindestens eine Naht aufweisenden Kaschierstoff, wobei das Verfahren die Schritte des Aufbringens des Kaschierstoffes auf die Oberfläche des Bauteils, des Ausrichtens der Naht des Kaschierstoffes in Abhängigkeit von der Kontur des Bauteils und den Schritte des Fixierens des Kaschierstoffes auf dem Bauteil umfasst. Das Besondere an dem Verfahren besteht nun darin, dass vor dem Ausrichten des Kaschierstoffes in die Naht des Kaschierstoffes mindestens ein Funktionsfaden über den gesamten Verlauf der Naht eingefädelt wird, wobei mit dem Funktionsfaden Schlaufen ausgebildet werden, die oberhalb der Oberfläche des Kaschierstoffes liegen und zur Aufnahme einer Positionierungshilfe geeignet sind. Dieser Funktionsfaden kann vor oder nach dem Aufbringen des Kaschierstoffes auf die Oberfläche des Bauteils in die Naht eingefädelt werden. In die so auf der Oberfläche des Kaschierstoffes ausgebildeten Schlaufen kann nun eine Positionierungshilfe eingeführt werden, mit deren Hilfe das Ausrichten der Naht des Kaschierstoffes erfolgt. Vorzugsweise werden die Schlaufen oberhalb der Sichtseite des Kaschierstoffes ausgebildet, die während des Kaschierens meist gut zugänglich ist.

Als Positionierungshilfen können grundsätzlich sämtliche Hilfsmittel eingesetzt werden, die von den Schlaufen erfasst und mit diesen fixiert bzw. gespannt werden können und deren Form dabei so ausgebildet ist, dass Angriffspunkte für ein Greifwerkzeug vorhanden sind. Eine vorteilhafte und einfache Ausgestaltung des erfindungsgemäßen Verfahrens sieht vor, dass ein Positionierungsstab in die Schlaufen des Funktionsfadens eingeführt wird, der anschließend durch Spannen des Funktionsfadens an der Naht des Kaschierstoffes fixiert wird. Dieser Positionierungsstab kann nun durch einfache Greifer erfasst werden, so dass mit Hilfe des Positionierungsstabes die Naht in die korrekte Position gebracht werden kann.

Die Positionierungshilfe erlaubt es, dass der Kaschierstoff mit Hilfe eines automatisierten Greifers, der in die Positionierungshilfe eingreift ausgerichtet werden kann, womit nun erstmalig eine vollautomatische Kaschierung eines Bauteils beispielsweise mit einer genähten Lederhaut ermöglicht wird.

Beim Einbringen der Positionierungshilfe auf die Oberfläche des Kaschierstoffes ist primär natürlich an eine Automatisierung des Ausrichtens der Naht des Kaschierstoffes gedacht. Allerdings haben die Entwicklungsarbeiten gezeigt, dass auch bei einem halbautomatischen Verfahren das Aufbringen von Angriffspunkten auf der Oberfläche des Kaschierstoffes eine erhebliche Erleichterung bei der Fertigung bedeutet und den Positionierungsaufwand deutlich verringert, so dass auch ein maschinenunterstütztes finales Ausrichten per Hand eine sinnvolle Ausgestaltung der vorliegenden Erfindung bedeutet.

Dies gilt auch für das Kaschieren von Bauteilen, die eine spezielle Nut zur Aufnahme der Naht aufweisen, denn auch die Positionierung der Naht beim Einführen in die Nut wird durch den Einsatz der Positionierungshilfe erleichtert.

Das Verfahren ist für sämtliche bekannten Kaschierstoffe geeignet, insbesondere für Kaschierstoffe ausgewählt aus der Gruppe bestehend aus Leder, Kunststofffolie, Gewebe, Textil-und Kunstleder.

Nach der korrekten Positionierung der Naht wird die Positionierungshilfe entfernt, nachdem die Halteschlaufen des Funktionsfadens gelockert wurden, und der Funktionsfaden wird aus dem Sichtfeld entfernt, indem er entweder gespannt oder vollständig gezogen wird.

Die endgültige Fixierung des Kaschierstoffes auf dem Bauteil erfolgt in der Regel durch Ausbildung einer festhaftenden Verbindung zwischen dem Kaschierstoff und der Oberfläche des Bauteils durch eine aktivierbare Klebeschicht. Bei einer bevorzugten Ausgestaltung des erfindungsgemäßen Verfahrens wird entweder die Bauteiloberfläche oder die Innenfläche des Kaschierstoffes vor dem Aufbringen des Kaschierstoffes auf die Oberfläche des Bauteils mit einem aktivierten Kleber beschichtet, wobei die Aktivität des Klebers so eingestellt ist, dass die vollständige Fixierung des Kaschierstoffes auf dem Bauteil erst nach dem korrekten Ausrichten der Naht des Kaschierstoffes erfolgt.

Im Folgenden wird die vorliegende Erfindung zusätzlich mit Hilfe von Zeichnungen erläutert. Dabei zeigen
- Figur 1: die Schnittdarstellung eines Ausschnittes eines Kaschierstoffes mit Naht beim Einführen der Positionierungshilfe,
- Figur 2: den Ausschnitt aus Figur 1 mit eingeführter Positionierungshilfe,
- Figur 3: den Ausschnitt aus Figur 2 im Zusammenspiel mit einem korrespondierenden Ausschnitt aus einem zu kaschierenden Bauteil,
- Figur 4: die Schnittdarstellung eines Ausschnitts eines kaschierten Bauteils während des Kaschierens und
- Figur 5: die Schnittdarstellung eines Ausschnitts eines fertig kaschierten Bauteils.

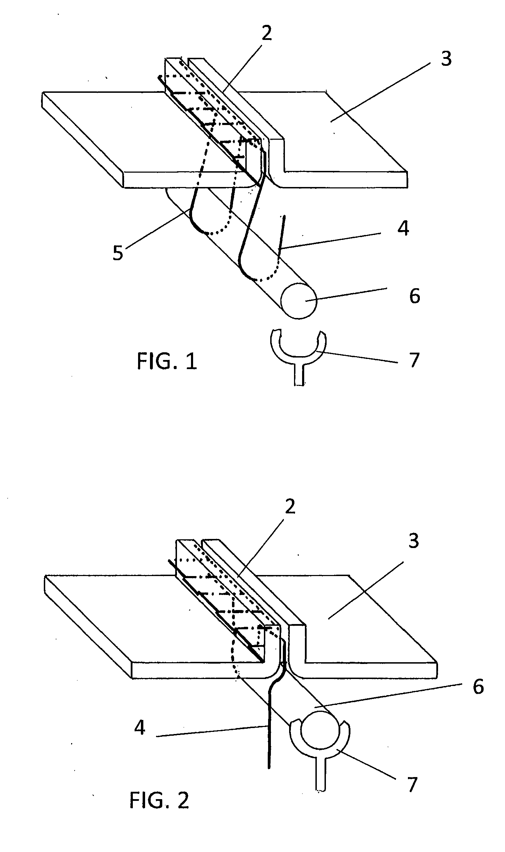

Die Figur 1 zeigt einen Schnitt durch einen Ausschnitt eines zweiteiligen Kaschierstoffes 3, dessen beide Teile mit einer Naht 2 verbunden sind. In die Naht 2 ist ein Funktionsfaden 4 eingefädelt, der auf der Sichtseite des Kaschierstoffes 3 bzw. der späteren Sichtseite des Bauteils Schlaufen 5 ausbildet, in die eine Positionierungshilfe 6 eingeführt ist. Im vorliegenden Fall handelt es sich um einen Positionierungsstab 6, dessen Form geeignet ist, von einem Greifer 7 erfasst zu werden.

In diesem Zusammenhang soll darauf hingewiesen werden, dass als Positionierungshilfe 6 ist jedes Hilfsmittel geeignet ist, das in eine Schlaufe 5 eingeführt und von einem Greifer 7 erfasst werden kann.

Die Figur 2 zeigt den gleichen Ausschnitt des Kaschierstoffes 3 für den nächsten Verfahrensschritt, bei dem die Positionierungshilfe 6 mit Hilfe des Funktionsfadens 4 im Bereich der Naht 2 auf der Sichtseite des Kaschierstoffes 3 fixiert ist. Die runde Form der Positionierungsstabes 6 ist geeignet, um als Angriffspunkt für einen entsprechenden Greifer 7 zu fungieren, mit dem dann über die Positionierungshilfe 6 die Naht 2 des Kaschierstoffes 3 auf dem Bauteil ausgerichtet werden kann.

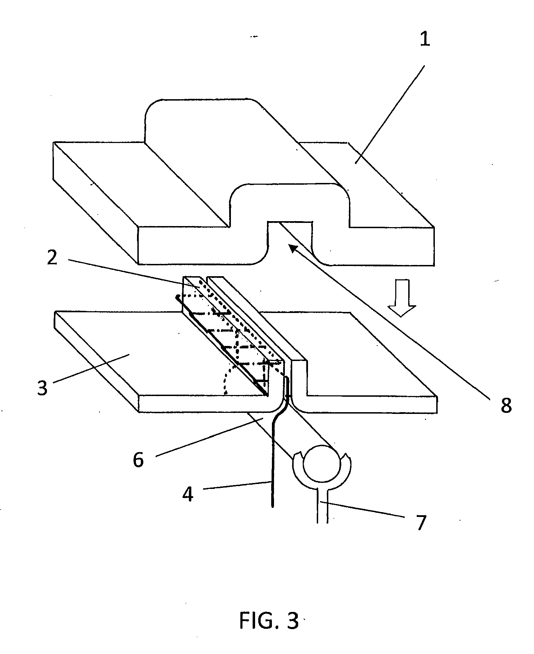

Die Figur 3 zeigt die Abbildung der Figur 2 im Zusammenspiel mit dem zu kaschierenden Bauteil 1. Im aktuellen Fall besitzt das Bauteil 1 eine Nut 8, in die die Naht 2 des Kaschierstoffes 3 mit Hilfe der Positionierungshilfe 6 und des Greifers 7 eingeführt werden soll. Zu dieser Abbildung soll angemerkt werden, dass das Vorliegen einer Nut 8 im Bauteil 1 optional ist und das Verfahren selbstverständlich auch für Bauteile mit glatten Bauteiloberflächen geeignet ist.

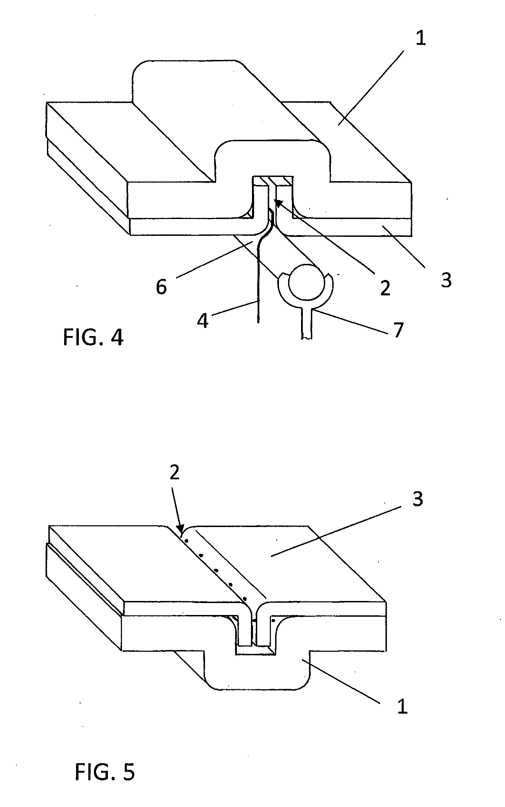

Die Figur 4 zeigt in einer Schnittdarstellung einen Ausschnitt des mit einem eine Naht 2 aufweisenden Kaschierstoff 3 belegten Bauteils 1 unmittelbar nach der Positionierung der Naht 2 des Kaschierstoffes 3 auf der Bauteiloberfläche. Zu dem in der Figur 4 festgehaltenen Zeitpunkt wird die Positionierungshilfe 6 noch von dem gespannten Funktionsfaden 4 gehalten und befindet sich gleichzeitig noch im Eingriff des Greifers 7.

Die Figur 5 zeigt in einer Schnittdarstellung einen Ausschnitt des fertig kaschierten Bauteils 1 mit einer Nut 8, in die eine Naht 2 des Kaschierstoffes 3 eingeführt ist. Die Positionierungshilfe 6 und der Greifer 7 wurden bereits entfernt und auch der Funktionsfaden 4 wurde der Sicht entzogen.

Zu den Figuren ist anzumerken, dass bewusst ein besonders einfaches Bauteil als Beispiel ausgewählt wurde, um das Prinzip des Ausrichtens des Kaschierstoffes auf der Bauteiloberfläche zu verdeutlichen. Es ist für den Fachmann selbstverständlich, dass das Verfahren auch für kompliziertere Bauteile geeignet ist, die aus mehreren Schichten aufgebaut sind und beispielsweise aus einem Träger einer darauf angeordneten PUR-Schaumschicht oder einem Abstandsgewirke und einem Dekor bestehen.

Das Verfahrensprinzip lässt sich auch realisieren, wenn die Schlaufen auf der Rückseite des Kaschierstoffes ausgebildet werden, was aber nur in besonderen Fällen Sinn macht, da die Rückseite weniger gut zugänglich ist.

### Bezugszeichenliste

- 1: Bauteil
- 2: Naht
- 3: Kaschierstoff
- 4: Funktionsfaden
- 5: Schlaufe
- 6: Positionierungshilfe
- 7: Greifer
- 8: Nut

## Patentansprüche

1. Verfahren zum Kaschieren eines Bauteils (1), insbesondere eines Innenverkleidungsbauteils für ein Kraftfahrzeug, mit einem mindestens eine Naht (2) aufweisenden Kaschierstoff (3), wobei das Verfahren die Schritte umfasst:
a) Aufbringen des Kaschierstoffes (3) auf die Oberfläche des Bauteils (1);
b) Ausrichten der Naht (2) des Kaschierstoffes (3) in Abhängigkeit von der Kontur des Bauteils (1); und
c) Fixieren des Kaschierstoffes (3) auf dem Bauteil (1),
**dadurch gekennzeichnet, dass** vor Schritt b) in die Naht (2) des Kaschierstoffes (3) mindestens ein Funktionsfaden (4) über den gesamten Verlauf der mindestens einen Naht (2) eingefädelt wird, wobei mit dem Funktionsfaden (4) oberhalb der Oberfläche des Kaschierstoffes (3) Schlaufen (5) zur Aufnahme einer Positionierungshilfe (6) ausgebildet werden, und in Schritt b) das Ausrichten der Naht (2) des Kaschierstoffes (3) mit Hilfe der in die Schlaufen (5) des Funktionsfadens (4) eingeführten Positionierungshilfe (6) erfolgt.

2. Verfahren nach Anspruch 1,
**dadurch gekennzeichnet, dass** die Schlaufen (5) oberhalb der Sichtseite des Kaschierstoffes (3) ausgebildet werden.

3. Verfahren nach Anspruch 1 oder 2,
**dadurch gekennzeichnet, dass** eine Angriffspunkte für einen Greifer (7) aufweisende Positionierungshilfe (6) eingesetzt wird.

4. Verfahren nach einem der Ansprüche 1 bis 3,
**dadurch gekennzeichnet, dass** als Positionierungshilfe ein Positionierungsstab eingesetzt wird, wobei der Positionierungsstab (6) in die Schlaufen (5) des Funktionsfadens (4) eingeführt wird und anschließend durch Spannen des Funktionsfadens (4) fixiert wird.

5. Verfahren nach einem der Ansprüche 1 bis 4,
**dadurch gekennzeichnet, dass** das Verfahren vollautomatisch abläuft.

6. Verfahren nach einem der Ansprüche 1 bis 5,
**dadurch gekennzeichnet, dass** ein Kaschierstoff (3) ausgewählt aus der Gruppe bestehend aus Leder, Kunststofffolie, Gewebe, Textil und Kunstleder eingesetzt wird.

7. Verfahren nach einem der Ansprüche 1 bis 6,
**dadurch gekennzeichnet, dass** vor Schritt c) die Positionierungshilfe (6) entfernt wird und anschließend der Funktionsfaden (4) gespannt oder gezogen wird.

## Claims

1. Process for laminating a component (1), in particular an interior trim component for a motor vehicle, with a laminating material (3) having at least one seam (2), wherein the process comprises the steps:
a) application of the laminating material (3) to the surface of the component (1);
b) alignment of the seam (2) of the laminating material (3) according to the contour of the component (1); and
c) fixing of the laminating material (3) to the
component (1),
**characterised in that**
before step b) at least one functional thread (4) is threaded into the seam (2) of the laminating material (3) over the entire course of the at least one seam (2), wherein loops (5) for receiving a positioning aid (6) are formed with the functional thread (4) above the surface of the laminating material (3), and in step b) the alignment of the seam (2) of the laminating material (3) is carried out with the aid of the positioning aid (6) introduced into the loops (5) of the functional thread (4).

2. Process according to claim 1,
**characterised in that**
the loops (5) are formed above the visible side of the laminating material (3).

3. Process according to claim 1 or 2,
**characterised in that**
a holding point for a positioning aid (6) having a gripper (7) is employed.

4. Process according to one of claims 1 to 3, **characterised in that**
a positioning rod is employed as the positioning aid, wherein the positioning rod (6) is introduced into the loops (5) of the functional thread (4) and is then fixed by tensioning the functional thread (4).

5. Process according to one of claims 1 to 4, **characterised in that**
the process proceeds fully automatically.

6. Process according to one of claims 1 to 5, **characterised in that**
a laminating material (3) chosen from the group consisting of leather, film of plastic, woven fabric, textile and artificial leather is employed.

7. Process according to one of claims 1 to 6, **characterised in that**
before step c) the positioning aid (6) is removed and the functional thread (4) is then tensioned or drawn.

## Revendications

1. Procédé permettant de revêtir un élément (1), en particulier un élément de garniture interne pour un véhicule automobile avec au moins un matériau de revêtement (3) muni d'une ligne de joint (2), ce procédé comprenant les étapes consistant à :
a) appliquer le matériau de revêtement (3) sur la surface de l'élément (1),
b) orienter la ligne de joint (2) du matériau de revêtement (3) en fonction des contours de l'élément (1), et
c) fixer le matériau de revêtement (3) sur l'élément (1),
**caractérisé en ce qu'**
avant l'étape b), au moins un fil fonctionnel (4) est inséré dans la ligne de joint (2) du matériau de revêtement (3) sur la totalité de l'étendue de cette ligne (2), selon lequel avec le fil fonctionnel (4) sont formées au-dessus de la surface du matériau de revêtement (3) des boucles (5) de réception d'un organe d'assistance au positionnement (6) et dans l'étape b) l'orientation de la ligne de joint (2) du matériau de revêtement (3) et effectuée à l'aide de l'organe d'assistance au positionnement (6) introduit dans les boucles (5) du fil fonctionnel (4).

2. Procédé conforme à la revendication 1,
**caractérisé en ce que**
les boucles (5) sont formées au-dessus de la face visible du matériau de revêtement (3).

3. Procédé conforme à la revendication 1 ou 2,
**caractérisé en ce qu'**
il est prévu un point de mise en prise pour un élément d'assistance au positionnement (6) comportant un élément de préhension (7).

4. Procédé conforme à l'une des revendications 1 à 3,
**caractérisé en ce qu'**
entant qu'élément d'assistance au positionnement on utilise une barre de positionnement, cette barre de positionnement (6) étant introduite dans les boucles (5) du fil fonctionnel (4) puis étant fixée par tension de ce fil fonctionnel (4).

5. Procédé conforme à l'une des revendications 1 à 4,
**caractérisé en ce qu'**
il est mis en oeuvre de façon totalement automatique.

6. Procédé conforme à l'une des revendications 1 à 5,
**caractérisé en ce que**
l'on choisit un matériau de revêtement (3) dans le groupe formé par du cuir, des feuilles de matière synthétique, du tissus, du textile ou du cuir synthétique.

7. Procédé conforme à l'une des revendications 1 à 6,
**caractérisé en ce qu'**
avant l'étape c) on enlève l'élément d'assistance au positionnement (6) puis on tend ou étire de fil fonctionnement (4).
